# EUROPEAN PATENT APPLICATION

(11) **EP 4 759 588 A1**
(43) Date of publication of application: **17.06.2026**
(21) Application number: 25216964.4
(22) Date of filing: 19.11.2025
(51) Int. Cl.: B60K 1/00

(54) **ELECTRIC VEHICLE**

(30) Priority: 12.12.2024 JP 2024217600
(71) Applicant: Toyota Jidosha Kabushiki Kaisha, Toyota-shi, Aichi-ken 471-8571 (JP)
(72) Inventor: ISHIBASHI, Masayuki, Toyota-shi, 471-8571 (JP)
(74) Representative: D Young & Co LLP

(57) **Abstract**

An electric vehicle may include a vehicle body; a plurality of wheels including a pair of front wheels; a drive unit including a motor, a differential gear mechanism, and a housing that houses the motor and the differential gear mechanism; a steering gear unit located forward of the drive unit in a longitudinal direction of the electric vehicle, extending along a width direction of the electric vehicle; a steering shaft extending rearward from the steering gear unit in the longitudinal direction; and a plurality of mounts supporting the drive unit against the vehicle body. The plurality of mounts may include a first mount attached to a side surface of the housing in the width direction and a portion of the steering shaft may be located above the first mount.

## Description

### CROSS REFERENCE TO RELATED APPLICATION

This application claims priority to Japanese Patent Application No. 2024-217600 filed on December 12, 2024. The entire content of the priority application is incorporated herein by reference.

### TECHNICAL FIELD

The art disclosed herein relates to electric vehicles.

### BACKGROUND ART

Japanese Patent Application Publication No. 2023-122982 describes an electric vehicle. This electric vehicle includes a vehicle body; a plurality of wheels comprising a pair of front wheels and supported by the vehicle body; a drive unit comprising a motor configured to drive the pair of front wheels; a steering gear unit located forward of the drive unit in a longitudinal direction of the electric vehicle, extending along a width direction of the electric vehicle, and configured to steer the pair of front wheels; and a steering shaft extending rearward from the steering gear unit in the longitudinal direction and configured to transmit a user's steering action to the steering gear unit.

### SUMMARY

Electric vehicles, such as the one described above, can achieve a reduction in a space required to house the steering gear unit and the drive unit by arranging the drive unit near the steering gear unit. However, since the drive unit is relatively heavy, the drive unit is supported by a plurality of mounts against the vehicle body and each mount is relatively large in size. Therefore, when the steering gear unit is located forward of the drive unit in the longitudinal direction of the electric vehicle, the steering shaft extending rearward from the steering gear unit may interfere with a mount located on a side surface of the drive unit or the steering gear unit may interfere with a mount located on a front portion of the drive unit. This makes it difficult to arrange the drive unit near the steering gear unit.

In view of the above, the disclosure herein provides a technology for arranging a drive unit near a steering gear unit.

The technology disclosed herein is embodied in an electric vehicle. In a first aspect, an electric vehicle may comprise a vehicle body; a plurality of wheels comprising a pair of front wheels and supported by the vehicle body; a drive unit comprising a motor configured to drive the pair of front wheels, a differential gear mechanism configured to distribute torque output from the motor to the pair of front wheels, and a housing that houses the motor and the differential gear mechanism therein; a steering gear unit located forward of the drive unit in a longitudinal direction of the electric vehicle, extending along a width direction of the electric vehicle, and configured to steer the pair of front wheels; a steering shaft extending rearward from the steering gear unit in the longitudinal direction of the electric vehicle and configured to transmit a steering action by a user to the steering gear unit; and a plurality of mounts supporting the drive unit against the vehicle body. The plurality of mounts may comprise a first mount attached to a side surface of the housing in the width direction of the electric vehicle. A portion of the steering shaft may be located above the first mount.

### BRIEF DESCRIPTION OF DRAWINGS

FIG. 1 is a diagram schematically illustrating a configuration of an electric vehicle 10 according to an embodiment.
FIG. 2 is a plan view illustrating positional relationships between a front drive unit 18, a steering gear unit 76, and a plurality of mounts 110a, 110b, 110c.
FIG. 3 is a side view illustrating positional relationships between the front drive unit 18, the steering gear unit 76, and the plurality of mounts 110a, 110b, 110c.
FIG. 4 is a front view illustrating positional relationships between the front drive unit 18, the steering gear unit 76, and the plurality of mounts 110a, 110b, 110c.
FIG. 5 is a skeleton diagram of the front drive unit 18.
FIG. 6 is a diagram schematically illustrating a configuration of the steering gear unit 76 with an intermediate shaft 82.

### DETAILED DESCRIPTION

In one aspect of the present teachings, an electric vehicle comprises a vehicle body; a plurality of wheels comprising a pair of front wheels and supported by the vehicle body; a drive unit comprising a motor configured to drive the pair of front wheels, a differential gear mechanism configured to distribute torque output from the motor to the pair of front wheels, and a housing that houses the motor and the differential gear mechanism therein; a steering gear unit located forward of the drive unit in a longitudinal direction of the electric vehicle, extending along a width direction of the electric vehicle, and configured to steer the pair of front wheels; a steering shaft extending rearward from the steering gear unit in the longitudinal direction of the electric vehicle and configured to transmit a steering action by a user to the steering gear unit; and a plurality of mounts supporting the drive unit against the vehicle body. The plurality of mounts comprises a first mount attached to a side surface of the housing in the width direction of the electric vehicle. A portion of the steering shaft is located above the first mount.

In the above electric vehicle, the drive unit is supported against the vehicle body by the plurality of mounts including the first mount. The first mount is attached to a side surface of the housing of the drive unit in the width direction of the electric vehicle, and the steering shaft is partially located above the first mount. That is, the first mount and the steering shaft are located such that they overlap in a height direction of the electric vehicle. This configuration allows for avoidance of interference between the steering shaft extending rearward from the steering gear unit in the longitudinal direction of the electric vehicle and the first mount supporting the drive unit. Thus, the drive unit can be located near the steering gear unit.

In a second aspect according to the first aspect, the electric vehicle may further comprise a drive shaft extending from the side surface of the housing in the width direction of the electric vehicle toward one of the pair of front wheels. In this case, the first mount may be located rearward of the drive shaft in the longitudinal direction of the electric vehicle. In this configuration, the first mount can be located rearward of the drive unit. Generally, the steering shaft extending from the steering gear unit extends upward and rearward. Thus, arrangement of the first mount on a rear portion of the drive unit allows the steering shaft to be located above the first mount with an enough space therebetween.

In a third aspect according to the first or second aspect, the motor may be coaxial with the differential gear mechanism in the drive unit. This configuration allows for a reduction in the size of the drive unit compared to a configuration in which the motor is not coaxial with the differential gear mechanism in the drive unit. The reduction in the size of the drive unit lowers the position of the first mount. Thus, the steering shaft can be located above the first mount with an enough space therebetween.

In a fourth aspect according to any of the first to third aspects, the electric vehicle may further comprise an electric component. In this case, the electric component may be located inward of the steering shaft in the width direction of the electric vehicle. This configuration allows for a reduction in a space required to house the steering shaft and the electric component.

In a fifth aspect according to the fourth aspect, the electric component may be a high-voltage component which constitutes a part of an air conditioning system.

In a sixth aspect according to any of the first to fifth aspects, the electric vehicle may further comprise a temperature regulation unit. The temperature regulation unit herein means any unit that is connected to components mounted in the electric vehicle via pipes and configured to control circulation of a heat medium between the multiple components. In this case, the temperature regulation unit may be located inward of the steering shaft in the width direction of the electric vehicle. This configuration allows for a reduction in a space required to house the steering shaft and the temperature regulation unit.

In a seventh aspect according to any of the first to sixth aspects, the plurality of mounts may further comprise a second mount attached to another side surface of the housing in the width direction of the electric vehicle, and a third mount located forward of the first mount and the second mount in the longitudinal direction of the electric vehicle. In this configuration, the drive unit can be supported against the vehicle body by three mounts.

In an eighth aspect according to the seventh aspect, a portion of the steering gear unit may be located above the third mount. This configuration allows for avoidance of interference between the third mount supporting the drive unit and the steering gear unit located forward of the drive unit in the longitudinal direction of the electric vehicle and extending in the width direction of the electric vehicle.

In a ninth aspect according to the eighth aspect, the steering gear unit may comprise a rack shaft supported such that the rack shaft is slidable along the width direction of the electric vehicle and a casing that houses the rack shaft therein. In this case, a portion of the casing may be located above the third mount. In another aspect, the steering gear unit may not necessarily comprise one or both of the rack shaft and the casing. In the present technology, the steering gear unit is not limited to a specific configuration.

The technology disclosed herein is also embodied in another electric vehicle. In a tenth aspect of the technology, an electric vehicle comprises a vehicle body; a plurality of wheels comprising a pair of front wheels and supported by the vehicle body; a drive unit comprising a motor configured to drive the pair of front wheels, a differential gear mechanism configured to distribute torque output from the motor to the pair of front wheels, and a housing that houses the motor and the differential gear mechanism; a steering gear unit located forward of the drive unit in a longitudinal direction of the electric vehicle, extending along a width direction of the electric vehicle, and configured to steer the pair of front wheels; and a plurality of mounts supporting the drive unit against the vehicle body. The plurality of mounts comprises a third mount attached to a front portion of the housing in the longitudinal direction of the electric vehicle. A portion of the steering gear unit is located above the third mount.

In the above electric vehicle, the drive unit is supported against the vehicle body by the plurality of mounts including the third mount. The third mount is attached to the front portion of the housing in the longitudinal direction of the electric vehicle, and the steering gear unit is partially located above the third mount. That is, the third mount and the steering gear unit are located such that they overlap in a height direction of the electric vehicle. This configuration allows for avoidance of interference between the steering gear unit which is located forward of the drive unit and extends in the width direction of the electric vehicle and the third mount which is located on the front portion of the housing of the drive unit. Thus, the drive unit can be located near the steering gear unit.

Representative, non-limiting examples of the present disclosure will now be described in further detail with reference to the attached drawings. This detailed description is merely intended to teach a person of skill in the art further details for practicing preferred aspects of the present teachings and is not intended to limit the scope of the disclosure. Furthermore, each of the additional features and teachings disclosed below may be utilized separately or in conjunction with other features and teachings to provide improved electric vehicles, as well as methods for using and manufacturing the same.

Moreover, combinations of features and steps disclosed in the following detailed description may not be necessary to practice the disclosure in the broadest sense, and are instead taught merely to particularly describe representative examples of the disclosure. Furthermore, various features of the above-described and below-described representative examples, as well as the various independent and dependent claims, may be combined in ways that are not specifically and explicitly enumerated in order to provide additional useful embodiments of the present teachings.

All features disclosed in the description and/or the claims are intended to be disclosed separately and independently from each other for the purpose of original written disclosure, as well as for the purpose of restricting the claimed subject matter, independent of the compositions of the features in the embodiments and/or the claims. In addition, all value ranges or indications of groups of entities are intended to disclose every possible intermediate value or intermediate entity for the purpose of original written disclosure, as well as for the purpose of restricting the claimed subject matter.

Referring to the drawings, an electric vehicle 10 according to an embodiment is described. The electric vehicle 10 is a so-called car. The electric vehicle 10 travels on road surfaces. The electric vehicle 10 is not limited to a vehicle driven/operated by a user and may be a vehicle remotely operated by an external device or an autonomous vehicle.

In the drawings, a direction FR corresponds to the front direction of the longitudinal direction (or front-rear direction) of the electric vehicle 10 (which may be referred to as "the vehicle longitudinal direction"), and a direction RR corresponds to the rear direction of the longitudinal direction of the electric vehicle 10. A direction LH corresponds to the left direction of the width direction (or right-left direction) of the electric vehicle 10 (which may be referred to as "vehicle width direction"), and a direction RH corresponds to the right direction of the width direction of the electric vehicle 10. A direction UP corresponds to the up direction of the height direction (or up-down direction) of the electric vehicle 10 (which may be referred to as "vehicle height direction"), and a direction DW corresponds to the down direction of the height direction of the electric vehicle 10.

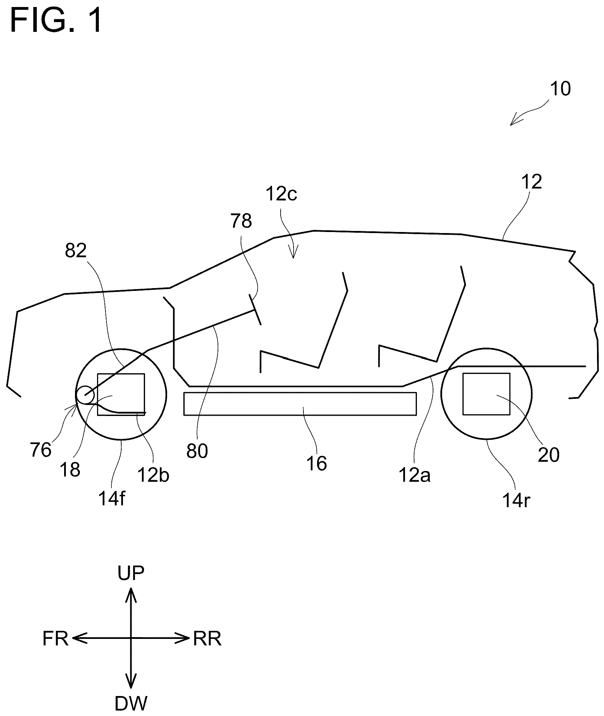

As illustrated in FIG. 1, the electric vehicle 10 comprises a vehicle body 12 and a plurality of wheels 14f, 14r. The vehicle body 12 comprises a main body 12a and a suspension member 12b. The main body 12a forms a framework of the vehicle body 12. The suspension member 12b is supported by the main body 12a. The suspension member 12b comprises a pair of side rails extending along the vehicle longitudinal direction and a pair of cross members extending along the vehicle width direction, although this is merely an example. The vehicle body 12 comprises a cabin 12c which is a space for passengers. The plurality of wheels 14f, 14r is supported by the vehicle body 12. The plurality of wheels 14f, 14r is rotatably attached to the vehicle body 12. The plurality of wheels 14f, 14r includes a pair of front wheels 14f located in a front portion of the vehicle body 12 and a pair of rear wheels 14r located in a rear portion of the vehicle body 12. The front wheels 14f are coaxial with each other, and the rear wheels 14r are also coaxial with each other. The number of the wheels 14f, 14r is not limited to four. Further, the vehicle body 12 is constituted of a metal such as a steel material or an aluminum alloy, although this is merely an example.

As illustrated in FIG. 1, the electric vehicle 10 further comprises a battery pack 16, a front drive unit 18, and a rear drive unit 20. The battery pack 16 comprises, for example, a plurality of secondary battery cells and is repeatedly rechargeable with external electric power. The battery pack 16 supplies electric power to each of the front drive unit 18 and the rear drive unit 20. The battery pack 16 is located below the cabin 12c. The front drive unit 18 is located in the front portion of the vehicle body 12. The rear drive unit 20 is located in the rear portion of the vehicle body 12.

The front drive unit 18 drives the pair of front wheels 14f. The rear drive unit 20 drives the pair of rear wheels 14r. The front drive unit 18 and the rear drive unit 20 have the same configuration except for the difference in the wheels they drive. For this reason, only the configuration of the front drive unit 18 is described below and description for the configuration of the rear drive unit 20 is omitted.

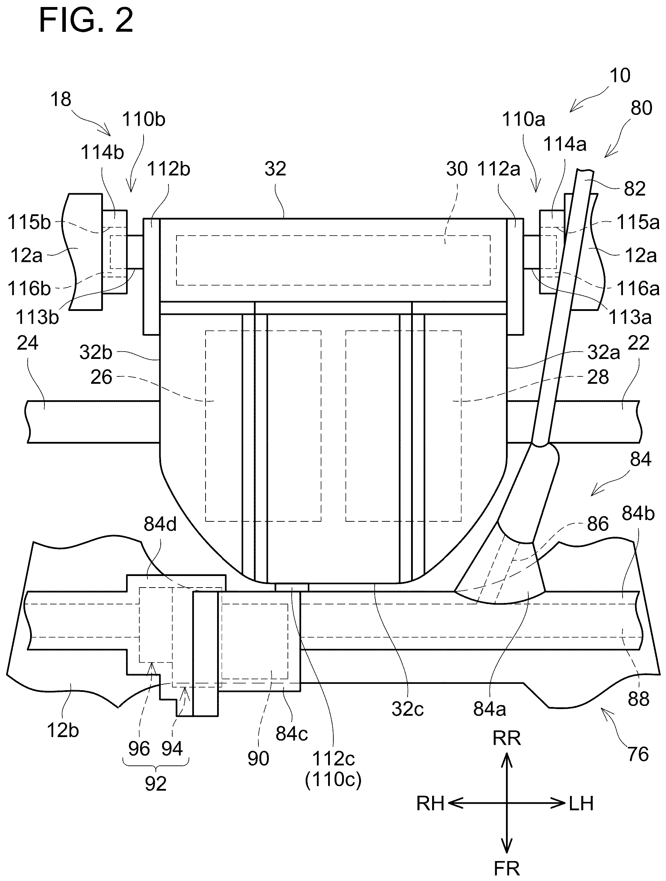

As illustrated in FIGS. 2 to 4, the electric vehicle 10 further comprises a plurality of mounts 110a, 110b, 110c. The plurality of mounts 110a, 110b, 110c supports the front drive unit 18 against the vehicle body 12. The plurality of mounts 110a, 110b, 110c is attached to a housing 32 of the front drive unit 18. The plurality of mounts 110a, 110b, 110c includes a first mount 110a, a second mount 110b, and a third mount 110c. The first mount 110a and the second mount 110b are attached to the main body 12a. The third mount 110c is attached to the suspension member 12b. However, portions of the vehicle body 12 to which the mounts 110a, 110b, 110c are attached are not particularly limited. That is, in another embodiment, the first mount 110a and the second mount 110b may be attached to portions of the vehicle body 12 other than the main body 12a. Further, the third mount 110c may be attached to a portion of the vehicle body 12 other than the suspension member 12b.

The first mount 110a is attached to one side surface 32a of the housing 32 in the vehicle width direction (i.e., a left side surface 32a of the housing 32). The second mount 110b is attached to the other side surface 32b of the housing 32 in the vehicle width direction (i.e., a right side surface 32b of the housing 32). The third mount 110c is located forward of the first mount 110a and the second mount 110b. The third mount 110c is attached to a front portion of the housing 32. In this embodiment, the third mount 110c is attached to a front surface 32c of the housing 32. However, the third mount 110c is not necessarily attached to the front surface 32c of the housing 32. In another embodiment, the third mount 110c may be located on the lower surface of the front portion of the housing 32.

The mounts 110a, 110b, 110c comprise unit-side mounting members 112a, 112b, 112c, vehicle body-side mounting members 114a, 114b, 114c, and anti-vibration members 116a, 116b, 116c, respectively. Each of the unit-side mounting members 112a, 112b, 112c is attached to corresponding one surface of the housing 32 of the front drive unit 18 (the left side surface 32a, the right side surface 32b, or the front surface 32c in this embodiment). Each of the vehicle body-side mounting members 114a, 114b, 114c is attached to the vehicle body 12 (to corresponding one of the main body 12a and the suspension member 12b in this embodiment). The anti-vibration members 116a, 116b, 116c are interposed between the unit-side mounting members 112a, 112b, 112c and the vehicle body-side mounting members 114a, 114b, 114c, respectively. The anti-vibration members 116a, 116b, 116c suppress vibrations of the front drive unit 18 from transmitting from the unit-side mounting members 112a, 112b, 112c to the vehicle body-side mounting members 114a, 114b, 114c. Thus, transmission of vibrations of the front drive unit 18 to the vehicle body 12 is suppressed. The anti-vibration members 116a, 116b, 116c are constituted of an elastic material, although this is merely an example. In this embodiment, the unit-side mounting members 112a, 112b, 112c comprise shafts 113a, 113b, 113c, respectively. The vehicle body-side mounting members 114a, 114b, 114c comprise through holes 115a, 115b, 115c, respectively. The shafts 113a, 113b, 113c are inserted in the through holes 115a, 115b, 115c, respectively. The anti-vibration members 116a, 116b, 116c are interposed between the shafts 113a, 113b, 113c and the through holes 115a, 115b, 115c, respectively.

The first mount 110a and the second mount 110b are symmetrical in shape with each other. Thus, the unit-side mounting members 112a, 112b, the vehicle body-side mounting members 114a, 114b, and the anti-vibration members 116a, 116b of these two mounts 110a, 110b are also symmetrical in shape with each other. The third mount 110c has a different shape from the first mount 110a and the second mount 110b. Thus, the unit-side mounting member 112c, the vehicle body-side mounting member 114c, and the anti-vibration member 116c of the third mount 110c have different shapes from the unit-side mounting members 112a, 112b, the vehicle body-side mounting members 114a, 114b, and the anti-vibration members 116a, 116b of the other two mounts 110a, 110b, respectively.

As illustrated in FIGS. 2, 3, and 5, the electric vehicle 10 further comprises a left front drive shaft 22 and a right front drive shaft 24. The left front drive shaft 22 is located between the front drive unit 18 and one of the pair of front wheels 14f (i.e., the left front wheel 14f). The left front drive shaft 22 extends from the left side surface 32a of the housing 32 toward the left front wheel 14f. The front drive unit 18 is connected to the left front wheel 14f via the left front drive shaft 22. The right front drive shaft 24 is located between the front drive unit 18 and the other of the pair of front wheels 14f (i.e., the right front wheel 14f). The right front drive shaft 24 extends from the right side surface 32b of the housing 32 toward the right front wheel 14f. The front drive unit 18 is connected to the right front wheel 14f via the right front drive shaft 24.

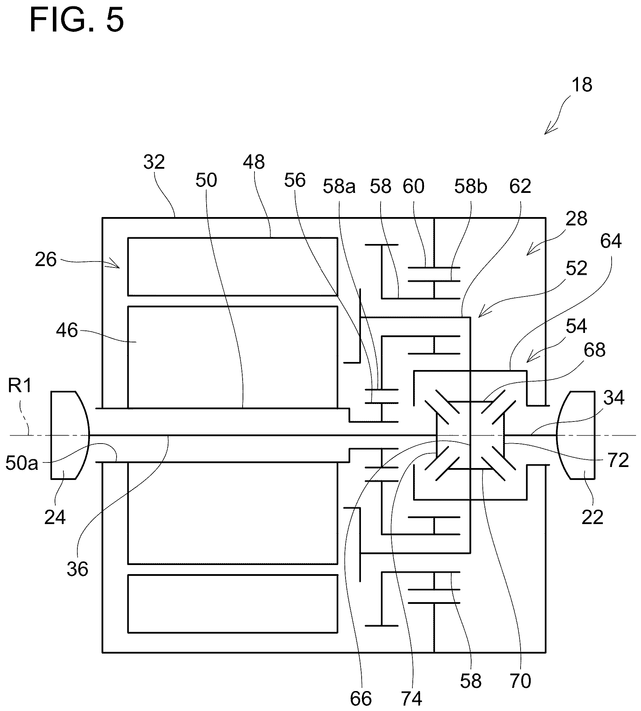

As illustrated in FIGS. 2 and 5, the front drive unit 18 comprises a motor 26, a gear mechanism 28, an electric unit 30, the housing 32, a left output shaft 34, and a right output shaft 36. The motor 26 is a traction motor for driving the pair of front wheels 14f. In this embodiment, the motor 26 is a motor actuated by three-phase AC power. The gear mechanism 28 distributes the drive power of the motor 26 to the pair of front wheels 14f. The motor 26 is connected to each of the left output shaft 34 and the right output shaft 36 via the gear mechanism 28. The left output shaft 34 is connected to the left front wheel 14f via the left front drive shaft 22. The right output shaft 36 is connected to the right front wheel 14f via the right front drive shaft 24. Thus, the motor 26 is connected to the pair of front wheels 14f via the gear mechanism 28, the output shafts 34, 36, and the front drive shafts 22, 24. Therefore, the motor 26 can drive the pair of front wheels 14f. In this embodiment, the motor 26 is coaxial with the gear mechanism 28.

The electric unit 30 controls electric power supplied to the motor 26. In this embodiment, the electric unit 30 comprises an inverter and controls electric power delivered between the battery pack 16 and the motor 26. The electric unit 30 is located rearward of the motor 26 and the gear mechanism 28. The electric unit 30 may further comprise a DC-DC converter.

As illustrated in FIGS. 2 to 5, the housing 32 is an enclosure member. The housing 32 houses the motor 26, the gear mechanism 28, and the electric unit 30 therein. The housing 32 is comprised of a single housing member or multiple housing members.

As illustrated in FIG. 5, the motor 26 comprises a rotor 46, a stator 48, and a rotor shaft 50. The rotor 46 is supported against the housing 32 such that it is rotatable about a rotation axis R1. The stator 48 has a substantially tubular shape having the rotation axis R1 as its center axis. The stator 48 is fixed to an inner wall of the housing 32. The stator 48 is located radially outward of the rotor 46. The rotor shaft 50 is connected to the rotor 46 and rotates integrally with the rotor 46. The rotor shaft 50 comprises a through hole 50a extending in the direction of the rotation axis R1. The right output shaft 36 is located within the through hole 50a.

As illustrated in FIG. 5, the gear mechanism 28 comprises a planetary gear mechanism 52 and a differential gear mechanism 54. The planetary gear mechanism 52 reduces the rotational speed of the rotor shaft 50 of the motor 26. The differential gear mechanism 54 distributes the torque of the motor 26 transmitted via the planetary gear mechanism 52 to the pair of front wheels 14f. In this embodiment, the differential gear mechanism 54 is coaxial with the motor 26.

As illustrated in FIG. 5, the planetary gear mechanism 52 comprises a sun gear 56, a plurality of stepped pinion gears 58, a ring gear 60, and a carrier 62. The sun gear 56 is connected to the rotor shaft 50 of the motor 26 and rotates integrally with the rotor shaft 50. Each of the stepped pinion gears 58 includes a large-diameter pinion gear 58a and a small-diameter pinion gear 58b. The diameter of the small-diameter pinion gears 58b is smaller than the diameter of the large-diameter pinion gears 58a. The large-diameter pinion gears 58a are meshed with the sun gear 56. The small-diameter pinion gears 58b are meshed with the ring gear 60. Each of the stepped pinion gears 58 is meshed with the sun gear 56 and the ring gear 60 so that they can rotate about their own rotation axes and revolve around the sun gear 56. The ring gear 60 is fixed to the housing 32. The carrier 62 supports the plurality of stepped pinion gears 58 such that they are rotatable. Further, the carrier 62 is supported against the housing 32 such that it is rotatable about the rotation axis R1. Thus, the revolution of the plurality of stepped pinion gears 58 causes the carrier 62 to rotate about the rotation axis R1.

As illustrated in FIG. 5, the differential gear mechanism 54 comprises a differential case 64, a pinion shaft 66, differential pinion gears 68, 70, a left side gear 72, and a right side gear 74. The differential case 64 is supported against the housing 32 such that it is rotatable about the rotation axis R1. The differential case 64 is connected to the carrier 62 of the planetary gear mechanism 52 and rotates integrally with the carrier 62. The pinion shaft 66, the differential pinion gears 68, 70, the left side gear 72, and the right side gear 74 are housed in the differential case 64.

The pinion shaft 66 is connected to the differential case 64 and rotates integrally with the differential case 64. The pinion shaft 66 extends in a direction perpendicular to the direction of the rotation axis R1. The differential pinion gears 68, 70 are supported against the pinion shaft 66 such that they are rotatable about the axis of the pinion shaft 66. The left side gear 72 and the right side gear 74 are coaxial with each other and face each other. The left side gear 72 is meshed with each of the differential pinion gears 68, 70. The left side gear 72 is connected to the left output shaft 34. The right side gear 74 is meshed with each of the differential pinion gears 68, 70. The right side gear 74 is connected to the right output shaft 36.

Here, a power transmission flow in the above-described front drive unit 18 is described. The rotatory power of the rotor shaft 50 of the motor 26 is transmitted to the stepped pinion gears 58 through the rotation of the sun gear 56. The stepped pinion gears 58, once the power is transmitted thereto, revolve along the inner circumference of the ring gear 60 under a reaction force from the fixed ring gear 60 while rotating about their own rotation axes. The revolving motion of the stepped pinion gears 58 is output as the rotation of the carrier 62. In the differential case 64 which rotates integrally with the carrier 62, the power is transmitted from the differential pinion gears 68, 70 to the side gears 72, 74. The front drive shafts 22, 24 are rotated by the power transmitted to the side gears 72, 74. As described above, in this embodiment, among the components of the front drive unit 18, the sun gear 56 functions as an input element, the ring gear 60 functions as a reaction element, and the carrier 62 functions as an output element.

In addition to the motor 26, each of the front drive unit 18 and the rear drive unit 20 may further comprise another drive source such as an engine. Further, in addition to or instead of the battery pack 16, the electric vehicle 10 may comprise another power supply such as a fuel cell unit or a solar panel. Thus, the electric vehicle 10 is not limited to a battery-powered electric vehicle and may be another type of electric vehicle such as a hybrid vehicle, a fuel cell vehicle, or a solar-powered car.

As illustrated in FIG. 1, the electric vehicle 10 further comprises a steering gear unit 76, a steering wheel 78, and a steering shaft 80 including an intermediate shaft 82. The steering gear unit 76 steers the pair of front wheels 14f. The steering gear unit 76 is located forward of the front drive unit 18 and extends in the vehicle width direction. The steering wheel 78 is located forward of the driver's seat and operated by the user. The steering shaft 80 transmits the user's steering action to the steering gear unit 76. The steering shaft 80 extends rearward from the steering gear unit 76. Since the electric vehicle 10 according to this embodiment is a left-hand drive vehicle, the steering shaft 80 extends rearward from a left portion of the steering gear unit 76. The rear end of the steering shaft 80 is connected to the steering wheel 78. The front end of the steering shaft 80 is connected to the steering gear unit 76. Thus, the steering shaft 80 can transmit the user's steering action, which is rotation of the steering wheel 78, to the steering gear unit 76. In another embodiment, the steering shaft 80 may not include the intermediate shaft 82 and may be comprised of a single shaft.

As illustrated in FIGS. 2 to 4 and 6, the steering gear unit 76 comprises a casing 84, a pinion shaft 86, a rack shaft 88, a motor 90, and a transmission mechanism 92. The casing 84 comprises a first casing 84a, a second casing 84b, a third casing 84c, and a fourth casing 84d. The casing 84 may be comprised of a single casing member or multiple casing members.

The pinion shaft 86 is housed in the first casing 84a and is rotatably supported by the first casing 84a. The pinion shaft 86 is connected to the steering shaft 80. In this embodiment, a rear end portion of the pinion shaft 86 is connected to the front end portion of the steering shaft 80. Thus, the pinion shaft 86 can rotate in response to the user's steering action on the steering wheel 78. A pinion gear portion 86a is formed on the outer surface of a front end portion of the pinion shaft 86. The rack shaft 88 is housed in the second casing 84b and supported by the second casing 84b such that the rack shaft 88 is slidable in the vehicle width direction. A rack gear portion 88a is formed on the outer surface of the rack shaft 88. The rack gear portion 88a is engaged with the pinion gear portion 86a. Thus, the rack shaft 88 can linearly move in the axial direction of the rack shaft 88 in response to the rotational movement of the pinion shaft 86. The linear movement of the rack shaft 88 is transmitted to the pair of front wheels 14f. Thus, the linear movement of the rack shaft 88 causes the pair of front wheels 14f to change course. Tie rods and knuckles may be located between the rack shaft 88 and the front wheels 14f.

The motor 90 is a drive source for the rack shaft 88. In this embodiment, the motor 90 is actuated by three-phase AC power. A rotation axis R2 of the motor 90 extends parallel to the rack shaft 88. The motor 90 is controlled by a control unit (not illustrated). The motor 90 can assist the user's steering action on the steering wheel 78 by moving the rack shaft 88. In case the electric vehicle 10 can travel autonomously, the rack shaft 88 can be moved without requiring the user's steering action on the steering wheel 78. The motor 90 is housed in the third casing 84c.

The transmission mechanism 92 is interposed between the motor 90 and the rack shaft 88. The transmission mechanism 92 is configured to convert the rotational movement of the motor 90 to the linear movement of the rack shaft 88. That is, the rotation of the motor 90 causes the rack shaft 88 to move along the axial direction. The configuration of the transmission mechanism 92 is not particularly limited. In this embodiment, the transmission mechanism 92 comprises a belt mechanism 94 and a linear motion mechanism 96, although this is merely an example. The belt mechanism 94 is interposed between the motor 90 and the linear motion mechanism 96 and transmits the rotational movement of the motor 90 to the linear motion mechanism 96. The linear motion mechanism 96 is interposed between the belt mechanism 94 and the rack shaft 88 and converts the rotational movement input through the belt mechanism 94 to the linear movement of the rack shaft 88. The belt mechanism 94 and the linear motion mechanism 96 are housed in the fourth casing 84d.

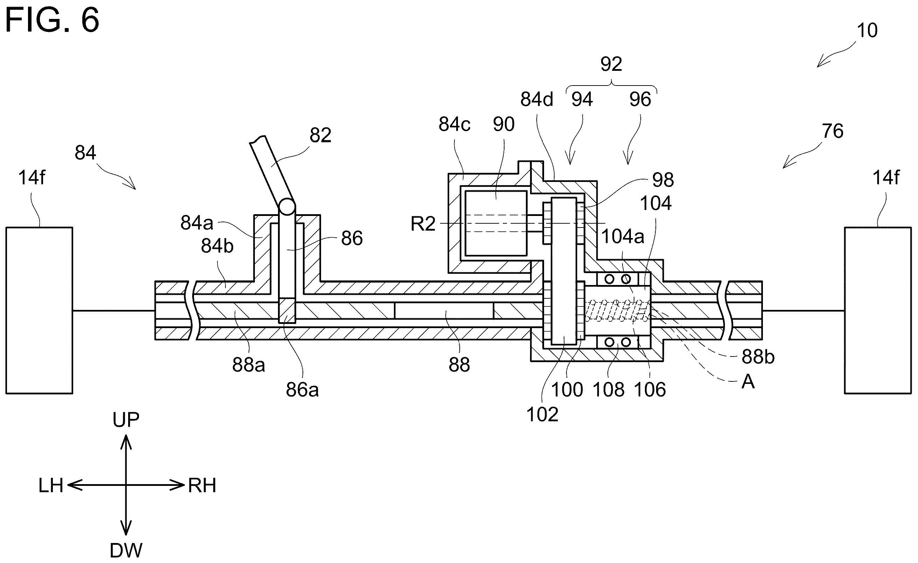

As illustrated in FIG. 6, the belt mechanism 94 comprises a pair of pullies 98, 100 and a belt 102. The belt 102 is placed around the pair of pullies 98, 100. The pair of pullies 98, 100 includes a drive pully 98 and a driven pully 100. The drive pully 98 is connected to the motor 90 and driven by the motor 90. The driven pully 100 is coaxial with the rack shaft 88. The diameter of the driven pully 100 is larger than the diameter of the drive pully 98, although this need not always be the case. Thus, the belt mechanism 94 also functions as a speed reducing mechanism.

As illustrated in FIG. 6, the linear motion mechanism 96 comprises a ball nut 104, a plurality of balls 106, and a bearing 108. The ball nut 104 has a cylindrical shape. The ball nut 104 is located to surround the rack shaft 88. The driven pulley 100 is coaxially fixed to the ball nut 104. Thus, the ball nut 104 rotates together with the rotation of the driven pully 100. A groove 104a is defined in the inner surface of the ball nut 104. A groove 88b is defined in the outer surface of the rack shaft 88. The plurality of balls 106 is located between the groove 104a of the ball nut 104 and the groove 88b of the rack shaft 88. Thus, the ball nut 104 and the rack shaft 88 are screwed together via the plurality of balls 106. The ball nut 104 is rotatably supported by the bearing 108 against the fourth casing 84d.

In the above-described transmission mechanism 92, the drive pully 98 rotates when the motor 90 rotates. The rotation of the drive pully 98 is transmitted to the driven pully 100 via the belt 102, causing the driven pully 100 and the ball nut 104 to rotate. Since the diameter of the driven pully 100 is larger than the diameter of the drive pully 98 in this embodiment, the rotational speed of the driven pully 100 and the ball nut 104 is slower than the rotational speed of the drive pully 98. The rotational speed of the drive pully 98 relative to the rotational speed of the driven pully 100 and the ball nut 104 varies depending on the ratio between the diameter of the drive pully 98 and the diameter of the driven pully 100. Since the ball nut 104 relatively rotates with respect to the rack shaft 88, the plurality of balls 106 interposed between the ball nut 104 and the rack shaft 88 is subjected to loads from the ball nut 104 and the rack shaft 88 and endlessly circulates in a rolling passage A. The endless circulation of the balls 106 converts the torque applied to the ball nut 104 to a force applied in the axial direction of the rack shaft 88. Thus, the rack shaft 88 linearly moves in the axial direction of the rack shaft 88 relative to the ball nut 104 in response to the rotational movement of the motor 90. This axial force applied to the rack shaft 88 works as an assist force to assist the pair of front wheels 14f to change course.

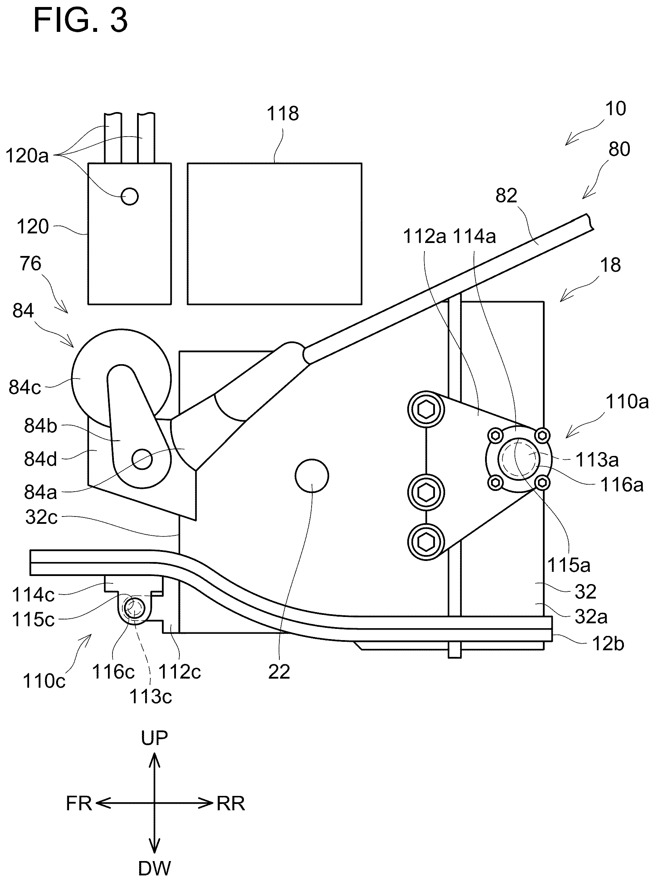

As illustrated in FIGS. 2 and 3, a part of the steering shaft 80 (more specifically, the intermediate shaft 82) is located above the first mount 110a. That is, the first mount 110a and the steering shaft 80 are located to overlap each other in the vehicle height direction. This configuration allows for avoidance of interference between the steering shaft 80 extending rearward from the steering gear unit 76 and the first mount 110a supporting the front drive unit 18. Thus, the front drive unit 18 can be located near the steering gear unit 76.

As illustrated in FIG. 3, the first mount 110a is located rearward of the left front drive shaft 22. This configuration allows the first mount 110a to be located in a rear portion of the front drive unit 18. Generally, the steering shaft 80 extending from the steering gear unit 76 extends upward and rearward. Thus, arrangement of the first mount 110a in the rear portion of the front drive unit 18 allows the steering shaft 80 to be located above the first mount 110a with an enough space therebetween.

As illustrated in FIG. 5, the motor 26 is coaxial with the differential gear mechanism 54 in the front drive unit 18, although this need not always be the case. This configuration allows for a reduction in the size of the front drive unit 18 compared to a configuration in which the motor 26 is not coaxial with the differential gear mechanism 54. The reduction in the size of the front drive unit 18 lowers the position of the first mount 110a. This allows the steering shaft 80 to be located above the first mount 110a with an enough space therebetween.

As illustrated in FIGS. 2 to 4, the plurality of mounts 110a, 110b, 110c includes, in addition to the first mount 110a, the second mount 110b attached to the other side surface of the housing 32 in the vehicle width direction and the third mount 110c located forward of the first mount 110a and the second mount 110b. This configuration allows the front drive unit 18 to be supported against the vehicle body 12 by the three mounts 110a, 110b, 110c.

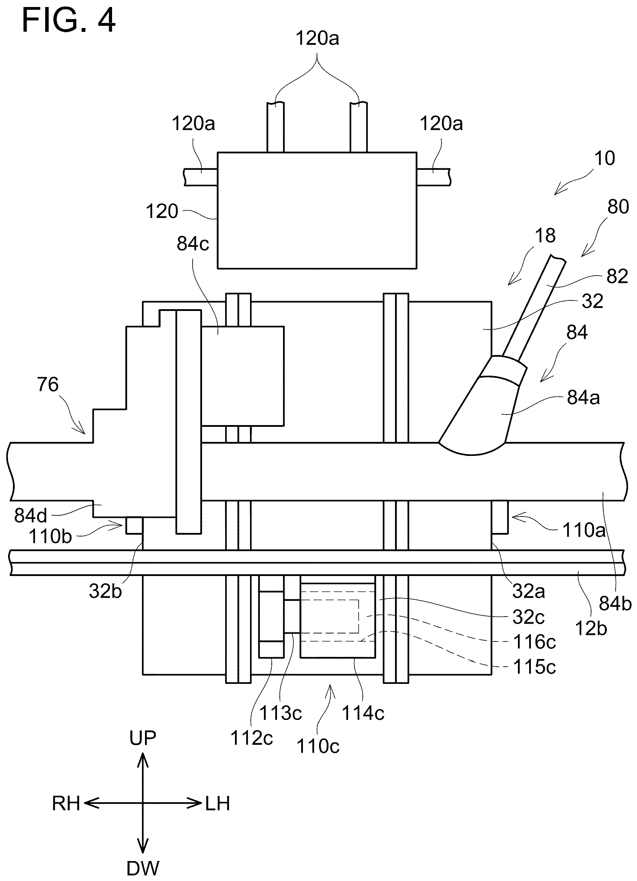

As illustrated in FIGS. 3 and 4, a part of the steering gear unit 76 is located above the third mount 110c. This configuration allows for avoidance of interference between the steering gear unit 76 which is located forward of the front drive unit 18 and extends in the vehicle width direction and the third mount 110c which supports the front drive unit 18.

Regarding the above, as illustrated in FIGS. 3 and 4, a part of the second casing 84b of the steering gear unit 76 is located above the third mount 110c in this embodiment. The rack shaft 88 is housed in the second casing 84b. The steering gear unit 76 does not necessarily comprise the rack shaft 88 and/or the casing 84. In the present technology, the configuration of the steering gear unit 76 is not particularly limited.

As illustrated in FIG. 3, the electric vehicle 10 further comprises an electric component 118, although this is merely an example. The electric component 118 is a high-voltage component constituting a part of an air conditioning system. The high voltage herein refers to an operating voltage above direct current 60 V or an operating voltage above alternate current 25 V (effective value). In this embodiment, the electric component 118 is an electric high-voltage heater (HVH) and can convert the DC power from the battery pack 16 to heat and heat, for example, a heat medium for heating the cabin 12c, although this is merely an example. The electric component 118 is located above the front drive unit 18. The electric component 118 and the front drive unit 18 are located to overlap each other in the vehicle height direction. The electric component 118 is located inward of the steering shaft 80 in the vehicle width direction. This configuration allows for a reduction in a space required to house the steering shaft 80 and the electric component 118.

As illustrated in FIGS. 3 and 4, the electric vehicle 10 further comprises a temperature regulation unit 120, although this need not always be the case. The temperature regulation unit 120 herein refers to a unit that is connected to multiple components mounted in the electric vehicle 10 via pipes 120a and controls circulation of the heat medium between the multiple components. In this embodiment, the temperature regulation unit 120 is connected to the battery pack 16, the electric component 118 (HVH), and a radiator (not illustrated) via the pipes 120a. The temperature regulation unit 120 comprises a valve, a pump, a temperature sensor, etc., although this need not always be the case. The temperature regulation unit 120 is located above the front drive unit 18. The temperature regulation unit 120 is located forward of the electric component 118. The temperature regulation unit 120 and the steering gear unit 76 are located to overlap each other in the vehicle height direction. The temperature regulation unit 120 is located inward of the steering shaft 80 in the vehicle width direction. This configuration allows for a reduction in a space required to house the steering shaft 80 and the temperature regulation unit 120.

In this embodiment, the electric vehicle 10 is a left-hand-drive vehicle, however, the electric vehicle 10 may be a right-hand-drive vehicle. In this case, the steering shaft 80 extends rearward from a right portion of the steering gear unit 76. In this regard, the second mount 110b is attached to the right side surface 32b of the housing 32 of the front drive unit 18. As described above, the first mount 110a and the second mount 110b are symmetrically arranged. Thus, the front drive unit 18 can be located near the steering gear unit 76, regardless of whether the electric vehicle 10 is a left-hand-drive vehicle or a right-hand-drive vehicle.

In another embodiment, the electric vehicle 10 may not comprise the steering shaft 80 including the intermediate shaft 82. In this case, the steering wheel 78 and the steering gear unit 76 may be communicably connected to each other, and the user's steering action on the steering wheel 78 may be electrically transmitted to the steering gear unit 76. That is, the electric vehicle 10 may use a steer-by-wire system. In this case, a portion of the steering gear unit 76 (e.g., a portion of the second casing 84b which houses the rack shaft 88 therein) may be located above the third mount 110c.

In the above embodiment, the front drive unit 18 and the rear drive unit 20 have the common structure. However, the front drive unit 18 and the rear drive unit 20 do not necessarily have the common structure. That is, in another embodiment, the rear drive unit 20 may have any different structure from that of the front drive unit 18 as long as it can drive the pair of rear wheels 14r.

In the above embodiment, the electric vehicle 10 comprises the front drive unit 18 and the rear drive unit 20. However, the electric vehicle 10 does not necessarily comprise the rear drive unit 20. That is, in another embodiment, the electric vehicle 10 may comprise only the front drive unit 18.

## Claims

1. An electric vehicle (10), comprising:
a vehicle body (12);
a plurality of wheels (14f, 14r) comprising a pair of front wheels (14f) and supported by the vehicle body (12);
a drive unit (18) comprising a motor (26) configured to drive the pair of front wheels (14f), a differential gear mechanism (54) configured to distribute torque output from the motor (26) to the pair of front wheels (14), and a housing (32) that houses the motor (26) and the differential gear mechanism (54) therein;
a steering gear unit (76) located forward of the drive unit (18) in a longitudinal direction of the electric vehicle (10), extending along a width direction of the electric vehicle (10), and configured to steer the pair of front wheels (14f);
a steering shaft (80) extending rearward from the steering gear unit (76) in the longitudinal direction of the electric vehicle (10) and configured to transmit a steering action by a user to the steering gear unit (76); and
a plurality of mounts (110a, 110b, 110c) supporting the drive unit (18) against the vehicle body (12);
wherein
the plurality of mounts (110a, 110b, 110c) comprises a first mount (110a) attached to a side surface (32a) of the housing (32) in the width direction of the electric vehicle (10), and
a portion of the steering shaft (80) is located above the first mount (110a).

2. The electric vehicle according to claim 1, further comprising a drive shaft (22) extending from the side surface (32a) of the housing (32) in the width direction of the electric vehicle (10) toward one of the pair of front wheels (14f),
wherein the first mount (110a) is located rearward of the drive shaft (22) in the longitudinal direction of the electric vehicle (10).

3. The electric vehicle according to claim 1 or 2, wherein the motor (26) is coaxial with the differential gear mechanism (54) in the drive unit (18).

4. The electric vehicle according to any one of claims 1 to 3, further comprising an electric component (118),
wherein the electric component (118) is located inward of the steering shaft (80) in the width direction of the electric vehicle (10).

5. The electric vehicle according to claim 4, wherein the electric component (118) is a high-voltage component which constitutes a part of an air conditioning system.

6. The electric vehicle according to any one of claims 1 to 5, further comprising a temperature regulation unit (120) connected to a component mounted in the electric vehicle (10) via a pipe (120a), wherein the temperature regulation unit (120) is configured to circulate a heat medium between the component and the temperature regulation unit (120),
wherein the temperature regulation unit (120) is located inward of the steering shaft (80) in the width direction of the electric vehicle (10).

7. The electric vehicle according to any one of claims 1 to 6, wherein the plurality of mounts (110a, 110b, 110c) further comprises a second mount (110b) attached to another side surface (32b) of the housing (32) in the width direction of the electric vehicle (10), and a third mount (110c) located forward of the first mount (110a) and the second mount (110b) in the longitudinal direction of the electric vehicle (10).

8. The electric vehicle according to claim 7, wherein a portion of the steering gear unit (76) is located above the third mount (110c).

9. The electric vehicle according to claim 8, wherein
the steering gear unit (76) comprises:
a rack shaft (88) supported such that the rack shaft (88) is slidable along the width direction of the electric vehicle (10); and
a casing (84) that houses the rack shaft (88) therein, and
a portion of the casing (84) is located above the third mount (110c).

10. An electric vehicle (10), comprising:
a vehicle body (12);
a plurality of wheels (14f, 14r) comprising a pair of front wheels (14f) and supported by the vehicle body (12);
a drive unit (18) comprising a motor (26) configured to drive the pair of front wheels (14f), a differential gear mechanism (54) configured to distribute torque output from the motor (26) to the pair of front wheels (14f), and a housing (32) that houses the motor (26) and the differential gear mechanism (54) therein;
a steering gear unit (76) located forward of the drive unit (18) in a longitudinal direction of the electric vehicle (10), extending along a width direction of the electric vehicle (10), and configured to steer the pair of front wheels (14f); and
a plurality of mounts (110a, 110b, 110c) supporting the drive unit (18) against the vehicle body (12);
wherein
the plurality of mounts (110a, 110b, 110c) comprises a third mount (110c) attached to a front portion of the housing (32) in the longitudinal direction of the electric vehicle (12), and
a portion of the steering gear unit (76) is located above the third mount (110c).
